# EUROPEAN PATENT SPECIFICATION

(11) **EP 0 665 135 B1**
(45) Date of publication and mention of the grant of the patent: **29.07.1998**
(21) Application number: 95200172.5
(22) Date of filing: 25.01.1995
(51) Int. Cl.: B60R 9/06, B60D 1/06

(54) **Carrier device for transporting, for example, bicycles**
Trägervorrichtung zum Transportieren, z.B. von Fahrrädern
Dispositif de transport, par exemple pour bicyclettes

(30) Priority: 26.01.1994 NL 9400115
(43) Date of publication of application: 02.08.1995
(73) Proprietor: Publiekrechtelijk Overheidslichaam Felua Groep, 7334 AC Apeldoorn (NL)
(72) Inventor: Visch, Herman, NL-8162 ZP Epe (NL); Sistermans, Carel Gerardus, NL-8172 VZ Vaassen (NL)
(74) Representative: Morel, Christiaan F., Ir.Dr.

(56) References cited:
- DE-A- 1 555 669
- DE-C- 553 337
- DE-C- 649 571
- FR-A- 2 684 056
- US-A- 2 217 234
- US-A- 3 710 370

## Description

The invention relates to a carrier device for coupling to a ball of a towing hook of a vehicle, which for the purpose is provided with coupling means consisting of at least two jaw elements and of clamping means by means of which the jaw elements can be pressed together, the clamping means consisting of two link bars and the first link bar being hingedly fixed at one end relative to a housing and at the other end being fixed to one end of the second link bar while the other end of the second link bar can be slid by way of a sliding guide relative to the housing against the first jaw element and a control element can be used to alter the angle between the link bars.

Such a carrier device is known from the American patent US-A 2,217,234. This known carrier device is a trailer hitch and could not be used as a carrier which is carried only by a towing hook, since the jaw elements do not grip over the stem, so that rotation about a horizontal axis is possible and in fact necessary for trailers. The clamping means are locked by means of a bolt. If this bolt would break, the connection would loosen. This leads to a dangerous situation and makes this known device unfit for a carrier device which is carried only by the towing hook and does not have wheels of itself. The device of US-A 2,217,234 can grip over only a limited part of the ball of the towing hook since the ball should abut against the upper wall of the housing before the jaw elements can be clamped against the ball. Consequently, the jaw elements cannot grip over the upper part of the ball, since this upper part lays against the upper wall of the housing of the towing hook device. The device does not have a control element which cannot be operated by itself but must be operated by means of a separate wrench. The clamping force cannot easily be adjusted. The adjusting nut is difficult to reach when the device is placed on a towing hook. Furthermore, the jaw elements must be moved apart over a relatively long distance before the ball of a towing hook can be placed between them.

The object of the invention is to provide a safe carrier device which is easy to fit without much effort, which has fixed coupling means which are easy to operate and can be used on all commercially available types of towing hooks, and in the case of which the clamping force is simple to adjust.

This object is achieved with the invention through the fact that the coupling means pivot relative to each other about a pin which is disposed in the housing in such a way that by way of a sliding guide in the housing it can be slid in the housing between a first extreme position and a second extreme position, the jaw elements being pushed apart by spring elements when the pin is in the abovementioned second extreme position, while when the pin is in the abovementioned first extreme position the jaw elements are held together against the action of the spring elements by stops which are immovably fixed to the housing, in which position the jaw elements can be fixed by the clamping means in the position in which the pin is in the abovementioned first extreme position.

Therefore, if the pin is in the second extreme position, the jaw elements are pushed apart by the spring elements. The jaw elements can be fitted around the ball and then slid between the stops, in which case the pin is in the first extreme position. The spring elements can now no longer push the jaw elements apart. Tightening the screw pin produces a clamping force between the jaw elements. With these measures the jaw elements can be made in such way that they can cover the whole surface of the ball of the towing hook, while it still is easy to position.

The carrier device is preferably designed in such a way that the control element is a screw pin which by way of a suitable threaded hole runs crosswise through a rotary shaft which is rotatably mounted in a housing in such a way that it carries out at least a small stroke, which screw pin is hingedly coupled at one end to both link bars. The screw pin can be tightened up to the point when the optimum clamping force is reached. In this way a great pressure force which clamps together the jaw elements can be exerted with a relatively small operating force. The operation requires the minimum of physical effort. A maximum clamping force can be applied even if the ball is weathered, worn or deformed. The screw pin should be fitted at a place which is easily accessible for the user when the carrier device, possibly with load and all, has been placed on the towing hook.

It is also preferable if the carrier device is designed in such a way that the housing is one end of a carrier bar in the form of an inverted U-section, in which the screw pin projects through one of the walls of the carrier bar. This produces an integral design, in which the housing of the coupling means is formed by the carrier bar. The coupling means are consequently given further good protection.

The stop for the first jaw element can now be achieved in a simple way through the fact that the stop for the first jaw element is an end plate disposed at the end of the carrier bar.

The link bars can be designed in such a way that at least one of the link bars consists of two elongated plates which are hingedly coupled at the ends of a pin, which is coupled to the screw pin. This gives a light construction with a broad pushing front.

The carrier device can also be designed advantageously if on either side of the coupling means it is provided with supporting elements which can be slid out relative to the housing in a sliding guide and can be fixed in a certain position by means of clamping means. The coupling means are consequently no longer retained only by the clamping force in the direction of rotation about the axis of the stem of the towing hook.

The invention will now be explained in greater detail with reference to a number of Figures, in which:
Figure 1 shows a carrier device according to the invention in perspective;
Figure 2 shows a coupling part of the carrier device according to the invention when uncoupled;
Figure 3 shows a coupling part of the carrier device according to the invention when coupled and fixed to a towing hook.

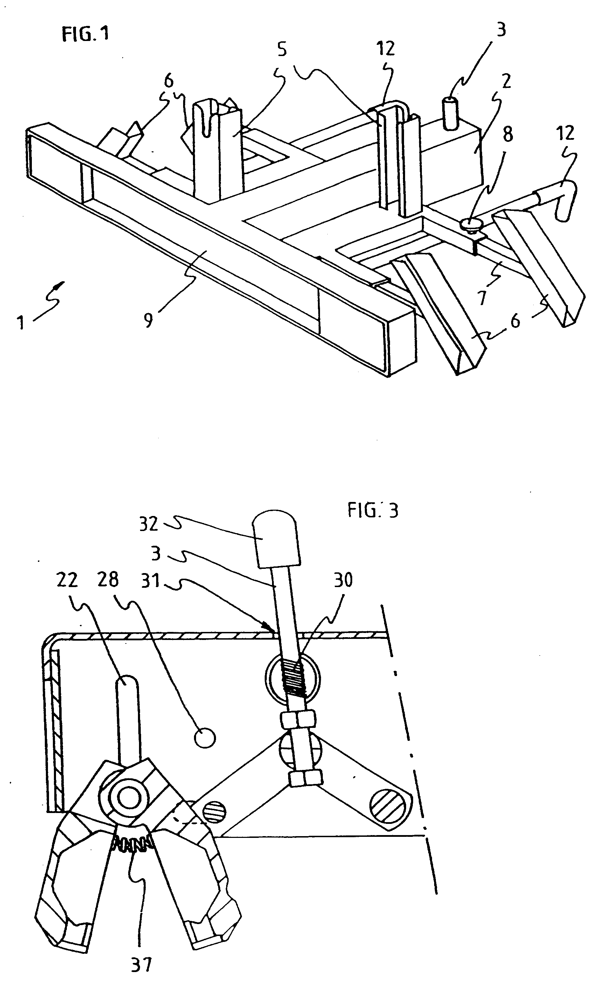

Figure 1 shows a carrier device 1 according to the invention. The carrier device 1 consists of a carrier bar 2 on which facilities for loading a bicycle are fitted. The head of the carrier bar 2 is provided with coupling means, which cannot be seen in this Figure. The coupling means can be tightened by a screw pin 3. The bicycles can be fixed to the carrier device 1 by means of the facilities 5, 6. The facilities 6 can be adjusted by means of a sliding guide 7 and adapted to the measurements of the bicycles to be transported. The sliding guide 7 can be fixed by tightening screw knob 8 of the sliding guide 7. The carrier device 1 shown in the Figure is designed for transporting two bicycles. Embodiments for one bicycle, or for three or more bicycles, or for luggage other than bicycles, are also possible. At the other end of the carrier bar 1 is a crossbar 9, consisting of a U-shaped bar in which rear lights 10, 11 are fixed. The carrier device 1 also comprises supporting elements 12, which are connected to side bars 13 in such a way that they can be extended. After the carrier device 1 has been fixed to a towing hook, the supporting elements 12 can be extended against the bumper of the car. The carrier device 1 consequently can no longer rotate about the shaft of the towing hook and sits firmly without jiggling.

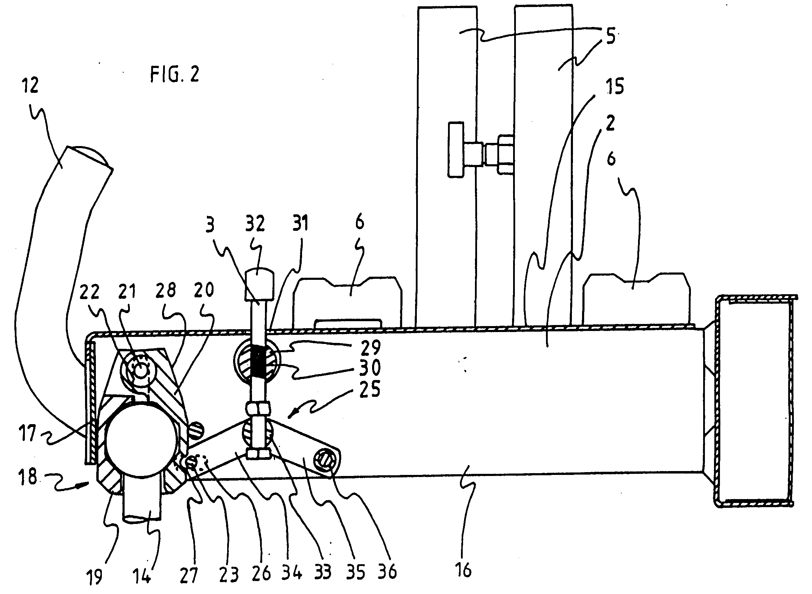

In Figure 2 the carrier device 1 is fixed to a towing hook 14. This illustration shows a longitudinal section of the carrier bar 2, which is in the form of a U-section, a web plate 15 of which is placed on the top side, and the cheeks 16 of which extend downwards. The carrier bar 2 is shut off at the end face by an end plate 17. Coupling means 18 are disposed in the interior of the U-profile. The coupling means 18 consist of two jaw elements 19, 20. The jaw elements 19, 20 can pivot relative to a hinge pin 21. The hinge pin 21 can be moved up and down by way of slotted holes 22. Said slotted holes 22 are situated in the cheeks 16. Spring elements (not shown here) push the jaw elements 19, 20 apart. When the hinge pin 21 is in the top ends of the slotted holes 22 the jaw elements 19, 20 are held together against the pushing force of the spring elements by the end plate 17 at one side and a slidable stop 23 and a fixed stop 24 at the other side. The stop 23 can be moved to and fro by means of clamping means 25 by way of slotted holes 26. In the extreme position in which the stop 23 is situated in Figure 2 the stop fits in a recess 27 in the jaw element 20. The jaw elements 19, 20 and the hinge pins cannot be moved downwards now. If the slidable stop 23 is moved by means of clamping means 25 to the other extreme position in the slotted holes 26, the stop 23 no longer retains the jaw elements, and the jaw elements 19, 20 and the hinge pin can be moved downwards. If the jaw element 20, together with jaw element 19 and the hinge pin 21, is moved down in such a way that the stop 24 presses against a slanting back part 28 of jaw element 20, the spring elements are given the opportunity to push the jaw elements 19, 20 apart. If the jaw elements 19, 20 are pressed far enough apart, the carrier bar 2 can be lifted off the towing hook 14.

The clamping means 25 comprise a rotary shaft 29, which is rotatably mounted in the cheeks 16 of the carrier bar 2. A screw pin 3 runs at right angles through said rotary shaft 29 by way of a threaded hole 30. The screw pin 3 projects by way of a large opening 31 through the web plate 15 of the carrier bar 2 and is provided with a control button 32 at the top side. At the other end, which is situated inside the carrier bar 2, the screw pin 3 is coupled to a shaft 33. Said shaft 33 runs parallel to the rotary shaft 29 and does not project through the cheeks 16. Two pairs of plates, each pair forming a link bar 34, 35, are fixed at both ends of the shaft 33. The link bar 35 is rotatably fixed at one end to the shaft 33 and is rotatably fixed at the other end to the cheeks 16 by means of fixing means 36. The link bar 34 is also rotatably fixed at one end to the shaft 33 and at the other end has the stop 23 which, as described above, is slidably mounted in the cheeks 16 of the carrier bar 2. If the screw pin 3 is now tightened, it moves downwards. The link bar 35 is also rotated downwards and as a result pushes the bottom end of the screw pin 3 in the direction of the jaw elements 19, 20. The link bar 34 is likewise rotated downwards in this way and is simultaneously pushed in the direction of the jaw elements 19, 20, until the stop 23 is situated in the recess 27 in the jaw element 20.

Figure 3 shows the same longitudinal section of the carrier bar 2, in which the jaw elements 19, 20 have been moved downwards, so that the carrier device 1 is disconnected from the towing hook 14. The spring elements 37 are shown in this Figure.

## Claims

1. Carrier device (1) for coupling to a ball of a towing hook of a vehicle, which for the purpose is provided with coupling means (18) consisting of at least two jaw elements (19, 20) and of clamping means (25), by means of which the jaw elements can be pressed together, the clamping means consisting of two link bars (34, 35), and the first link bar (33) being hingedly fixed at one end relative to a housing and at the other end being fixed to one end of the second link bar (34), while the other end of the second link bar (34) can be slid by way of a sliding guide relative to the housing against the first jaw element (20), and a control element (3) can be used to alter the angle between the link bars **characterized in that** the coupling means (19, 20) pivot relative to each other about a pin (21) which is disposed in the housing in such a way that by way of a sliding guide (22) in the housing it can be slid in the housing between a first extreme position and a second extreme position, the jaw elements (19, 20) being pushed apart by spring elements (37) when the pin (21) is in the abovementioned second extreme position, while when the pin is in the abovementioned first extreme position the jaw elements are held together against the action of the spring elements (37) by stops (17, 24) which are immovably fixed to the housing, in which position the jaw elements can be fixed by the clamping means in the position in which the pin is in the abovementioned first extreme position.

2. Carrier device according to Claim 1, **characterized in that** the control element is a screw pin (3) which by way of a suitable threaded hole (30) runs crosswise through a rotary shaft (29) which is rotatably mounted in a housing in such a way that it carries out at least a small stroke, which screw pin (3) is hingedly coupled at one end to both link bars (33, 34).

3. Carrier device according to Claim 1 or 2, **characterized in that** the housing is one end of a carrier bar in the form of a U-profile (2), in which the screw pin (3) projects through one of the walls of the carrier bar.

4. Carrier device according to Claim 3, **characterized in that** the stop for the first jaw element is an end plate (17) fitted at the end of the carrier bar (2).

5. Carrier device according to one of the preceding Claims 2, 3 or 4 **characterized in that** at least one of the link bars (34, 35) consists of two elongated plates which are hingedly coupled to the ends of a pin, which is coupled to the screw pin (3).

6. Carrier device according to one of the preceding claims, **characterized in that** on either side of the coupling means it is provided with supporting elements (6) which can be slid out relative to the housing in a sliding guide (7) and can be fixed in a certain position by means of clamping means (8).

## Patentansprüche

1. Trägervorrichtung (1) zum Ankoppeln einer Kugel an einen Abschlepphaken eines Fahrzeuges, die zu diesem Zweck mit einer Kupplungsvorrichtung (18) ausgestattet ist, welche aus mindestens zwei Backenelementen (19, 20) und einer Klemmvorrichtung (25) besteht, mit deren Hilfe die Backenelemente zusammengedrückt werden können, wobei die Klemmvorrichtung aus zwei Verbindungsstangen (34, 35) besteht, und die erste Verbindungsstange (33) scharnierartig an einem Ende relativ zu einem Gehäuse fixiert ist, und am anderen Ende an einem Ende der zweiten Verbindungsstange (34) fixiert ist, während das andere Ende der zweiten Verbindungsstange (34) mittels einer Schiebeführung relativ zum Gehäuse gegen das erste Backenelement (20) verschoben werden kann, und ein Steuerelement (3) dazu verwendet werden kann, den Winkel zwischen den Verbindungsstangen zu verändern, **dadurch gekennzeichnet**, daß die Kupplungsvorrichtungen (19, 20) relativ zueinander um einen Stift (21) geschwenkt werden können, der sich im Gehäuse befindet, so daß er mittels einer Schiebeführung (22) im Gehäuse innerhalb des Gehäuses zwischen einer ersten extremen Position und einer zweiten extremen Position verschoben werden kann, wobei die Backenelemente (19, 20) durch die Federelemente (37) auseinandergedrückt werden, wenn sich der Stift (21) in der oben erwähnten zweiten extremen Position befindet, während dann, wenn sich der Stift in der oben erwähnten ersten extremen Position befindet, die Backenelemente gegen die Wirkung der Federelemente (37) durch die Anschläge (17, 24) zusammengehalten werden, welche unbeweglich am Gehäuse fixiert sind, wobei die Backenelemente in dieser Position durch die Klemmvorrichtung in der Position fixiert werden können, in der sich der Stift in der oben erwähnten ersten extremen Position befindet.

2. Trägervorrichtung gemäß Anspruch 1, **dadurch gekennzeichnet**, daß es sich bei dem Steuerelement um einen Schraubstift (3) handelt, der sich mittels eines geeigneten Gewindeloches (30) quer durch eine Drehwelle (29) erstreckt, die auf drehbare Weise so in einem Gehäuse montiert ist, daß sie einen zumindest kleinen Hub ausführt, wobei der Schraubstift (3) scharnierartig an einem Ende an beide Verbindungsstangen (33, 34) angekoppelt ist.

3. Trägervorrichtung gemäß Anspruch 1 oder 2, **dadurch gekennzeichnet**, daß das Gehäuse durch ein Ende einer Trägerschiene in der Form eines umgedrehten U-Profils (2) gebildet wird, in welches der Schraubstift (3) durch eine der Wände der Trägerschiene hineinragt.

4. Trägervorrichtung gemäß Anspruch 3**, dadurch gekennzeichnet**, daß es sich bei dem Anschlag für das erste Backenelement um eine Endplatte (17) handelt, die am Ende der Trägerschiene (2) befestigt ist.

5. Trägervorrichtung gemäß einem der vorhergehenden Ansprüche 2, 3 oder 4, **dadurch gekennzeichnet**, daß mindestens eine der Verbindungsstangen (34, 35) aus zwei länglichen Platten besteht, die auf scharnierartige Weise an die Enden eines Stiftes angekoppelt sind, der an den Schraubstift (3) angekoppelt ist.

6. Trägervorrichtung gemäß einem der vorhergehenden Ansprüche, **dadurch gekennzeichnet**, daß sie an einer der Seiten der Kupplungsvorrichtung mit Stützelementen (6) ausgestattet ist, die relativ zum Gehäuse in einer Schiebeführung (7) hinausgeschoben und mit Hilfe von Klemmvorrichtungen (8) in einer bestimmten Position fixiert werden können.

## Revendications

1. Porte-charge (1) pour accouplement à une boule d'un crochet de remorquage d'un véhicule, qui est pourvu dans ce but de moyens de couplage (18), consistant en au moins deux éléments de mâchoire (19,20), et de moyens de blocage (25) à l'aide desquels les éléments de mâchoire peuvent être pressés l'un vers l'autre, les moyens de blocage étant constitués de deux biellettes (34,35), la première biellette (35) étant fixée, à une extrémité, de façon pivotante par rapport à un boîtier et étant fixée,à l'autre extrémité, à une extrémité de la deuxième biellette (34) tandis que l'autre extrémité de la deuxième biellette (34) peut coulisser dans un guidage de glissement par rapport au boîtier, contre le premier élément de mâchoire (20), et un élément de commande (3) peut être utilisé pour modifier l'angle entre les biellettes, caractérisé en ce que les moyens de couplage (19, 20) pivotent l'un par rapport à l'autre autour d'un axe (21) qui est disposé dans le boîtier d'une manière telle que, grâce à un guidage de glissement (22) prévu dans le boîtier, il peut coulisser dans le boîtier entre une première position extrême et une deuxième position extrême, les éléments de mâchoire (19,20) étant écartés l'un de l'autre par des éléments élastiques (37) lorsque l'axe (21) est dans la deuxième position extrême précitée tandis que, lorsque l'axe est dans la première position extrême précitée, les éléments de mâchoire sont pressés l'un vers l'autre contre l'action des éléments élastiques (37) par des butées (17,24) qui sont fixées de façon immobile sur le boîtier, et, dans cette position, les éléments de mâchoire peuvent être fixés par les moyens de blocage dans la position dans laquelle l'axe est dans la première position extrême précitée.

2. Porte-charge suivant la revendication 1, caractérisé en ce que l'élément de commande est une tige filetée (3) qui traverse transversalement, par l'intermédiaire d'un trou taraudé approprié (30), un arbre rotatif (29) qui est monté de façon tournante dans un boîtier d'une manière telle qu'il effectue au moins une petite course, ladite tige filetée (3) étant reliée de façon articulée,à une extrémité, aux deux biellettes (33,34).

3. Porte-charge suivant la revendication 1 ou 2, caractérisé en ce que le boîtier est une extrémité d'une barre porteuse sous la forme d'un profilé en J (2), dans lequel la tige filetée (3) fait saillie à travers une des parois de la barre porteuse.

4. Porte-charge suivant la revendication 3, caractérisé en ce que la butée pour le premier élément de mâchoire est une plaque d'extrémité (17) montée à l'extrémité de la barre porteuse (2).

5. Porte-charge suivant une des revendications précédentes 2,3 ou 4, caractérisé en ce qu'au moins une des biellettes (34,35) est constituée de deux plaques allongées qui sont reliées de façon pivotante aux extrémités d'un axe qui est relié à la tige filetée(3).

6. Porte-charge suivant une des revendications précédentes, caractérisé en ce que, de part et d'autre des moyens de couplage, il est prévu des éléments de support (6) qui peuvent coulisser à l'extérieur par rapport au boîtier dans un guidage de glissement (7) et qui peuvent être fixés dans une certaine position à l'aide de moyens de blocage (8).
